# EUROPEAN PATENT APPLICATION

(11) **EP 1 336 361 A1**
(43) Date of publication of application: **20.08.2003**
(21) Application number: 01981084.5
(22) Date of filing: 13.11.2001
(51) Int. Cl.: A47C 7/18, A47C 7/02, A47C 7/72, A47C 27/15, B60N 2/44

(54) **SEAT PAD FOR VEHICLE**

(30) Priority: 21.11.2000 JP 2000354529; 22.12.2000 JP 2000390902
(71) Applicant: Bridgestone Corporation, Tokyo 104-8340 (JP)
(72) Inventor: ZENBA, M., c/o Yokohama Plant Bridgestone Corp., Yokohama-shi, Kanagawa 244-0812 (JP); EBE, K., c/o Yokohama Plant Bridgestone Corp., Yokohama-shi, Kanagawa 244-0 (JP)
(74) Representative: Whalley, Kevin
(86) International application number: JP0109898
(87) International publication number: WO02041736

(57) **Abstract**

A seat pad 1 for vehicles comprises a top part 2 corresponding to a seating section (under-hip section), an under-thigh section, and side bulging sections, and a bottom part 3 located on the underside of the top part 2. The top part 2 and the bottom part 3 are formed separately from each other and are connected to each other. The bottom part 3 is formed into the same configuration allowing commonization among different types of vehicles so that the seat pad can be partly commonized among various types and various grades of vehicles. A seat sensor 4 is disposed between the bottom part 3 and the top part 2.

## Description

### FIELD OF THE INVENTION

The present invention relates to a seat pad for vehicles and, more particularly, to a seat pad for vehicles comprising a top part and a bottom part which are formed separately from each other and are united with each other.

### BACKGROUND OF THE INVENTION

A seat pad for vehicles is usually made of a flexible polyurethane foam or a semi-rigid polyurethane foam.

For the purpose of improving the occupant's comfort of the seat pad for vehicles, a seat pad for vehicles having a double-layer structure composed of an outer layer part and a lower layer part has been proposed in which the outer layer part to be directly touched by an occupant is made of a flexible material and the lower layer part is made of a material having relatively high degree of hardness. Such a seat pad for vehicles is usually manufactured by pouring two kinds of liquid urethane compounds having different degrees of hardness into a mold at the same time or with a time difference.

The configurations and materials of the seating section, an under-thigh section, and side bulging sections of the seat pad, and the backrest of the vehicle seat are completely different in accordance with the type or grade of vehicles. As for the frame on which the seat pad is mounted, mass production by virtue of commonization has been implemented for the purpose of cost reduction. Accordingly, the same frame can be adopted to different types and grades of vehicles. Though the outer layer side is changed in accordance with the type or grade of vehicle, the configuration of the bottom side to be in contact with the frame is nowadays the same even for different types and grades of vehicles.

In the molding method of pouring two kinds of liquid urethane compounds into a mold, a boundary position between the different materials is not constant due to mixing of the liquids at the boundary. Thus, resultant products frequently have poor reproducibility and also have variation. Since it is difficult to match materials of excessively different foamabilities or properties, there must be limitation on used material. Accordingly, there is a problem that it is hard to make a difference in characteristics of materials between the outer layer and the lower layer and, therefore, the required performance may not be satisfied. There is another problem that the cost of material must be high because of the limitation on material.

As described in the above, the commonization has been implemented for the vehicle seat frame while the commonization has not yet been implemented for the seat pad. It is still the case that seat pads are manufactured which are different in accordance with the types and grades of vehicles.

To prevent the malfunction of a front-passenger airbag, a seat sensor is sometimes installed to a vehicle seat. Usually, a film-like sensor is attached to a seat surface of a seat cushion pad of a front-passenger seat. However, there are following problems:
i) Another man-hour is required for attaching the sensor. Working accuracy of attaching is required. It is difficult to position the sensor during attaching operation.
ii) Occupant may feel the sensor as a foreign object when seated.
iii) When concentrated load is generated, for example, in case of mounting a child restraint seat, a sensor may be damaged, leading to malfunction of the sensor.
iv) To resolve the above problems ii), iii), such artifice for further applying a slab foam on the pad outer layer on which the sensor is attached is required and many man-hours are additionally required.
v) It is required to change the configuration of sensor to match the surface design of the seat pad and commonization irrespective of the vehicle type is thus impossible.

### DISCLOSURE OF THE INVENTION

It is an object of the present invention to provide a seat pad for vehicles which achieves cost down by designing the seat pad to be partly commonized among various types and grades of vehicles and in which materials for an upper layer part and a lower layer part can be selected separately, whereby the seat pad can be tailored to the wide-ranging needs on performance without increasing the cost of materials.

It is another object of the present invention to provide a seat pad for vehicles provided with a seat sensor, wherein the seat pad can be easily manufactured, prevents an occupant from feeling discomfort due to a seat sensor, and prevents the seat sensor from being subjected to concentrated load, thereby preventing the malfunction of the seat sensor and improving durability of the seat sensor. In addition, the seat pad for vehicles allows the commonization of the seat sensor among various seat pads for vehicles of different types.

The seat pad for vehicle according to the first aspect of the present invention is a seat pad comprising a top part and a bottom part which are formed separately from each other and then connected to each other, wherein the bottom part is formed into the same configuration allowing commonization among different types of vehicles.

Since the top part and the bottom part are formed separately from each other and then connected to each other in this seat pad for vehicles, there is no limitation on the combination between the material of the top part and the material of the bottom part. Since the material of the top part and the material of the bottom part can be selected separately from a board range of materials, the seat pad can be tailored to the wide-ranging needs on performance by employing various combinations with regard to the hardness and other properties. Since the bottom part is formed into the same configuration allowing commonization not only among different grades of vehicles of the same type but also among different types of vehicles, the cost can be reduced because of the commonization of the bottom part.

The seat pad according to the second aspect of the present invention is a seat pad for vehicles comprising a top part and a bottom part which are formed separately from each other and then connected to each other, and comprising a sheet-like seat sensor which is disposed between the matching faces of the bottom part and the top part.

In the seat pad structured as mentioned above, the seat sensor is located inside the seat pad for vehicles which has no effect on design so that a mark (e.g. holes or mark-off line) indicating the position of the seat sensor can be formed. The number of man-hour for post-bonding operation can be reduced.

Since the seat sensor is disposed deep inside the seat pad, an occupant can be prevented from feeling discomfort due to a seat sensor. In addition, the seat sensor is hardly subjected to concentrated load, thereby reducing the malfunction of the seat sensor.

Since the seat sensor is not affected by design of outer surface, the seat sensor can be commonized among various types of vehicles.

### BRIEF DESCRIPTION OF THE DRAWINGS

Fig. 1a is a perspective view showing an embodiment of a seat pad for vehicles according to the first aspect, Fig. 1b is a sectional view taken along a line Ib-Ib of Fig. 1a, and Fig. 1c is a sectional view taken along a line Ic-Ic of Fig. 1a;
Fig. 2a is a sectional view showing a bottom part of another embodiment of the seat pad for vehicles of the present invention in a state before engagement and Fig. 2b is a sectional view showing the bottom part in a state after the engagement;
Fig. 3 is a sectional view showing further another embodiment of the seat pad for vehicles of the present invention;
Fig. 4a is a perspective view showing an embodiment of a seat pad for vehicles according to the second aspect, Fig. 4b is a sectional view taken along a line IVb-IVb of Fig. 4a, and Fig. 4c is a sectional view taken along a line IVc-IVc of Fig. 4a;
Fig. 5 is a perspective view showing a bottom part of the seat pad for vehicles of the present invention; and
Fig. 6 is a perspective view showing a bottom part of a seat pad for vehicles according to still another embodiment of the present invention.

### DETAILED DESCRIPTION OF THE PREFERRED EMBODIMENTS

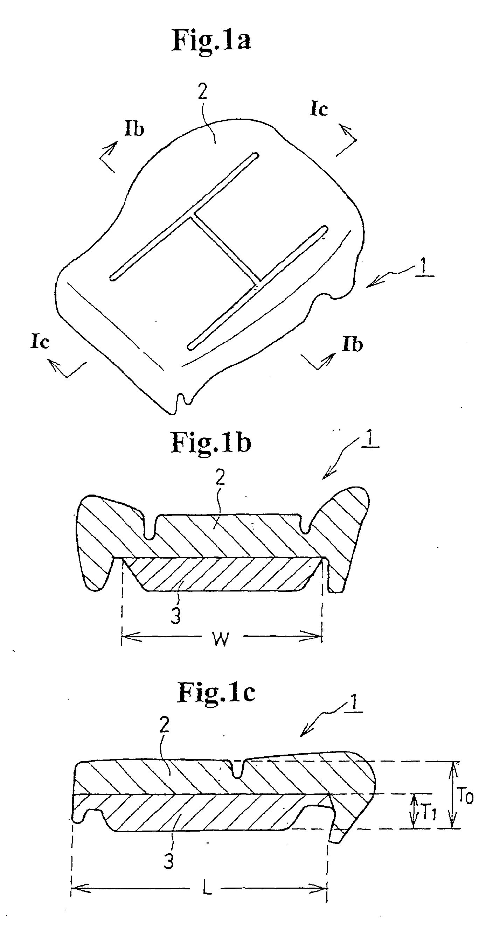

First, an embodiment of a seat pad for vehicles according to the first aspect will be described with reference to Figs. 1a-1c.

A seat pad 1 for vehicles comprises a top part 2 corresponding to a seating section (under-hip section), an under-thigh section, and side bulging sections, and a bottom part 3 located on the underside of the top part 2. The top part 2 and the bottom part 3 are formed separately from each other and are connected to each other by adhesive bonding.

The top part 2 is a part of which design is changed variously in accordance with the type or grade of a vehicle and to be directly touched by an occupant. In a case of a pad of which concept is emphasis on cushioning property or a case of using soft urethane or the like having a thickness of 5 mm or more as a covering member for a seat pad, it is preferable to use low-density material which is cheaper for the top part and to use high-performance material for the bottom part which constitutes larger volume in the height direction.

As the material for the top part 2, it is preferable to use a polyurethane foam of which core density is 25-45 kg/m³, hardness at 25% is 15-20 kgf/φ200. As the material for the bottom part 3, it is preferable to use a polyurethane foam of which core density is 45-70 kg/m³, hardness at 25% is 16-30 kgf/φ200.

In order to manufacture a pad having soft touch of the surface or a pad capable of providing well feeling at the beginning of sitting, as the material for the top part 2, it is preferable to use a polyurethane foam of which core density is 45-70 kg/m³, hardness at 25% is 8-20 kgf/φ200, and as the material for the bottom part 3, it is preferable to use a polyurethane foam of which core density is 25-45 kg/m³, hardness at 25% is 16-30 kgf/φ200.

As the configurations and dimensions of the top part 2 are determined according to the design for each type or grade of vehicle, the top part 2 can be manufactured by pouring a liquid urethane compound into each designed mold and thus foaming and molding.

The bottom part 3 is located on the underside of a portion corresponding to the normal sitting position (under-hip section) of the seat pad 1 and has such a configuration as to fit the seat frame which can be commonized among various types and various grades of vehicles.

The bottom part 3 has the same configuration allowing the commonization of the bottom part 3 among different types of vehicles. The bottom part 3 may be formed by using a same mold or by cutting from a polyurethane foam block.

Since the bottom part 3 can be commonized among different types of vehicles, the bottom part 3 has such a size as to fit the commonized frame and also to be united with any of different top parts and also preferably has a size enough for ensuring the comfort to sit (seating comfort) and the stability of supporting. In view of improving the advantage of increase in size of commonized parts, the comfort to sit (seating comfort), and the stability of supporting, the size of the bottom part 3 is preferably large. Since the bottom part 3 is made of high-performance material, the large size leads to increase in cost. As for the size of the bottom part 3, the length of longitudinal direction L is preferably from 300 to 700 mm, especially from 400 to 550 mm, the length of width direction W is preferably from 200 to 500 mm, especially from 300 to 400 mm, and the thickness T₁ is preferably from 50 to 90 %, especially from 60 to 80 %, of the total thickness T₀ of the pad.

The total thickness T₀ of the pad is the total thickness at the main sitting position of the portion corresponding to the normal sitting position and the thickness T₁ of the bottom part 3 is the thickness at the same position. There are portions having thickness ratio other than the aforementioned ratio for providing connection to the frame or imparting the shape as a seat.

As adhesive for bonding the top part 2 and the bottom part 3, urethane adhesive may be used. The top part 2 and the bottom part 3 are united by adhesive bonding according to a conventional method.

The method for connecting the top part 2 and the bottom part 3 is not limited to the adhesive bonding. The top part and the bottom part may be connected using flat fastener such as velcro tape (trade name) or by fitting the bottom part into the top part with specially designed connecting portions.

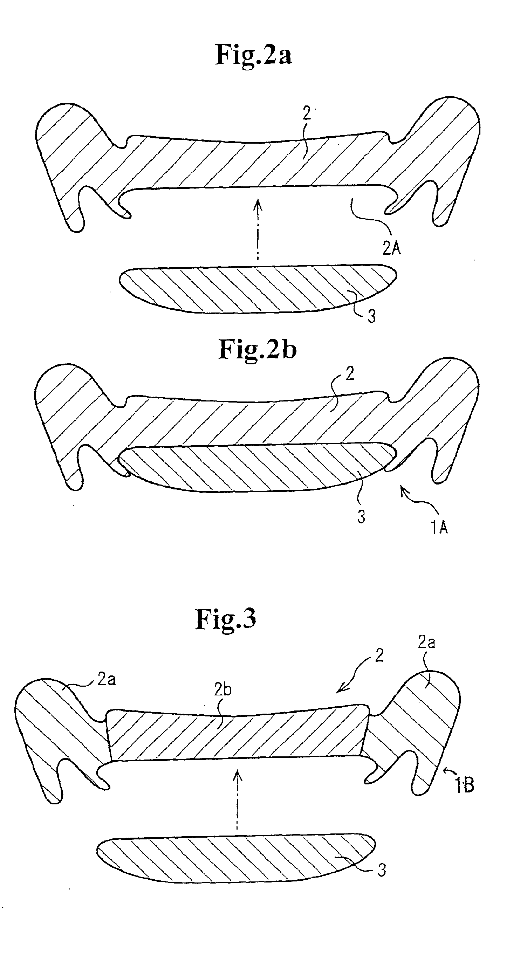

Figs. 2a, 2b are sectional views showing a seat pad 1A for vehicles in which a top part and a bottom part are united by the fitting as mentioned above. In the seat pad 1A, the top part 2 is provided at its lower surface with a concave portion 2A to which the bottom part 3 can be fitted (Fig. 2a) so that the top part 2 and the bottom part 3 are united by fitting the bottom part 3 to the concave portion 2A (Fig. 2b).

In the seat pad of adhesive bonding type as shown in Figs. 1a-1c, the top part 2 may be made of two or more kinds of different materials. For instance, a seat pad 1B for vehicles shown in Fig. 3 has a top part 2 which is provided at its lower surface with a concave portion 2A to which a bottom part 3 is fitted and of which a seating section 2b is made of a material different from the material of side bulging sections 2a, 2a. The top part 2 can be manufactured by pouring different kinds of liquid urethane compounds into a same mold and foaming and molding them.

Though the part corresponding to the seating section, the under-thigh section, and the side bulging sections is the top part 2 and the bottom part 3 is located on the underside of the top part 2 in the seat pads for vehicles shown in Figs. 1a-3, the constitutions of the top part 2 and the bottom part 3 are not limited thereto. For instance, the bottom part 3 may extend to be located on the undersides of the side bulging sections.

The seat pad for vehicles according to the present invention can provide a different seat for each type or grade of a vehicle, while its bottom part can be commonized for seat pads among various kinds of vehicles such as a passenger car, a bus, and a truck, thereby providing a beneficial effect on reducing the cost of seat pads for vehicles.

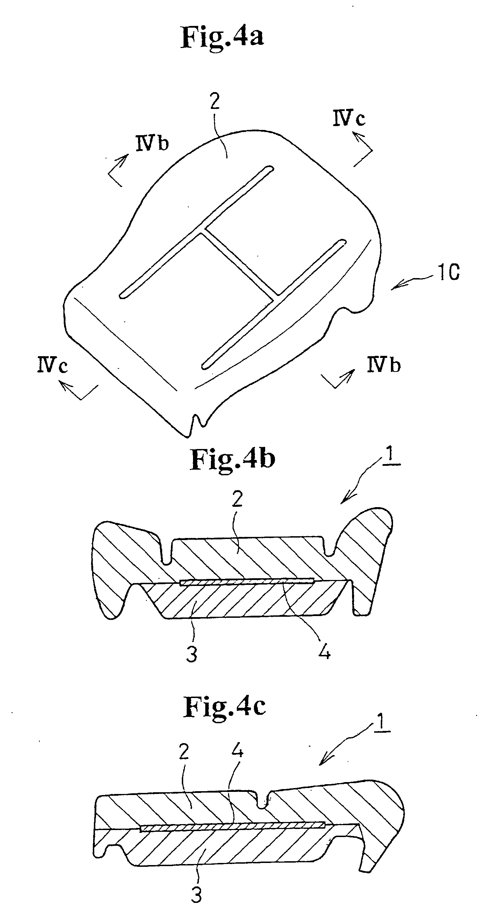

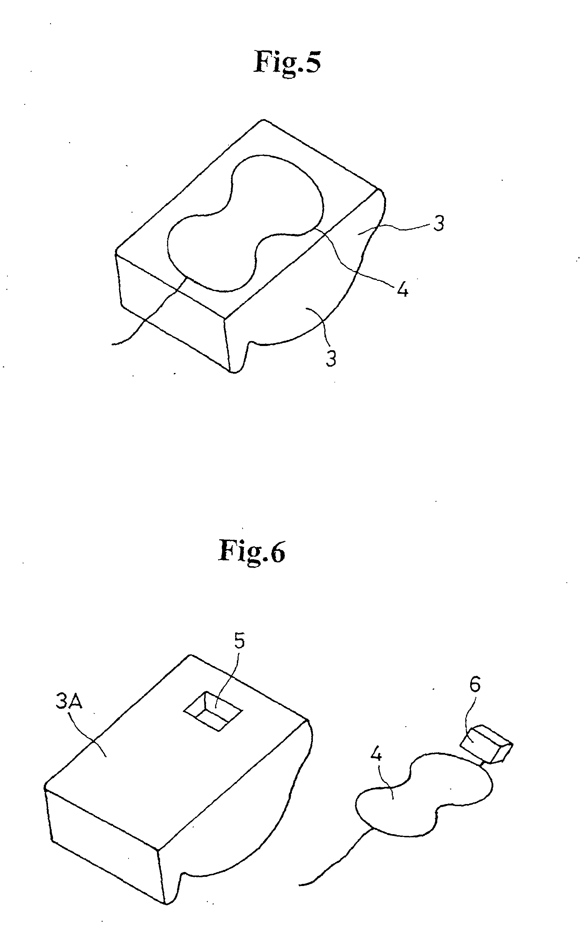

Hereinafter, a seat pad for vehicles according to the second aspect will be described with reference to Figs. 4a-4c and Fig. 5.

A seat pad 1C for vehicles comprises a top part 2 corresponding to a seating section (under-hip section), an under-thigh section, and side bulging sections, and a bottom part 3 located on the underside of the top part 2. The top part 2 and the bottom part 3 are formed separately from each other, a seat sensor 4 is disposed on the upper face of the bottom part 3, and the bottom part 3 and the top part 2 are connected to each other by adhesive bonding.

In this embodiment, the upper face of the bottom part 3 and the matching face of the top part 2 are generally flat horizontal planes. Alternatively, only portions corresponding to the position of the seat sensor 4 are designed to be flat and other matching faces may be provided with concave or convex portions for alignment of the bottom part 3 and the top part 2.

As mentioned above, at least portions corresponding to the location of the seat sensor 4 of the matching faces of the top part 2 and the bottom part 3 are designed to be flat (preferably, horizontal planes), whereby the sheet-like seat sensor 4 can be extremely easily disposed on the bottom part 3.

The upper face of the bottom part 3 is preferably provided with a mark indicating the position of the seat sensor 4. The mark is preferably a line (e.g. mark-off line) along the outer periphery of the seat sensor 4. However, the mark may be holes formed on positions corresponding to the outer periphery of the seat sensor 4.

The thickness of the top part 2 at a position corresponding to the location of the seat sensor 4 is preferably in a range from 10 to 50 % of the total thickness of the top part 2 and the bottom part 3. This thickness prevents an occupant from feeling discomfort when seated in the seat pad 1C. This thickness also prevents the seat sensor 4 from being subjected to concentrated load, thereby preventing the malfunction, the deterioration, and the damage of the seat sensor 4.

According to the present invention, as shown in Fig. 6, the seat sensor 4 may be provided with a chip-like flexible member 6 and the bottom part 3A may be provided at its upper surface with a concave portion 5 so that the chip-like flexible member 6 is fitted into the concave portion 5, thereby positioning the seat sensor 4.

By designing the concave portion 5 and the chip-like flexible member 6 to be substantially rectangular parallelopipeds which are perfectly fitted to each other, the directions of the chip-like flexible member 6 and the concave portion 5 for fitting operation can be uniquely defined, thereby uniquely determining the position and direction of the seat sensor 4. That is, is the chip-like flexible member 6 and the concave portion 5 are cubic, there is a possibility that the direction of the chip-like flexible member 6 is shifted by 90° when the chip-like flexible member 6 is fitted into the concave portion 5. If the chip-like flexible member 6 and the concave portion 5 are column shapes, the direction of the chip-like flexible member 6 can not be decided. Substantially rectangular parallelepiped for the chip-like flexible member 6 includes a rectangular parallelopiped-like shape of which corners are rounded (for example, elliptic cylindrical shape) besides the rectangular parallelopiped.

The chip-like flexible member 6 is preferably formed of the same material as the foam forming the bottom part 3A such as an urethane foam.

The chip-like flexible member 6 is preferably located at a position outwardly extending from the body of the seat sensor 4. According to this structure, a laborer can dispose the seat sensor 4 on the bottom part 3A while observing the condition for fitting the chip-like flexible member 6 into the concave portion 5 with his or her eyes, thereby improving the workability for disposing the seat sensor 4.

The concave portion 5 and the chip-like flexible member 6 are preferably located around the center of a front portion of the seat pad for vehicles.

All of the top part 2 and the bottom part 3, 3A are preferably made of polyurethane foam. The top part 2 and the bottom part 3, 3A are preferably bonded with urethane adhesive. However, they may be connected using flat fastener or the like.

Though the part corresponding to the seating section, the under-thigh section, and the side bulging sections is the top part 2 and the bottom part 3, 3A is located on the underside of the top part 2 in the seat pads for vehicles shown in Figs. 4a-6, the constitutions of the top part 2 and the bottom part 3, 3A are not limited thereto. For instance, the bottom part 3, 3A may extend to be located on the undersides of the side bulging sections.

### INDUSTRIAL APPLICABILITY

As described in the above, the seat pad for vehicles according to the first aspect can be tailored to the wide-ranging needs on performance by employing various combinations with regard to the hardness and other properties because the material of the top part and the material of the bottom part can be selected separately and arbitrarily from a board range of materials without limitation on combination between the material of the top part and the bottom part. Not only among different grades of vehicles of the same type but also among different types of vehicles, the bottom part can be commonized, thereby reducing the cost. A seat pad of which the top part is made of low-density material which is cheaper and the bottom part is made of high-performance material can provide desired seating comfort, stability of supporting, and stability and, in addition, the total cost of materials of the pad is advantageously low.

The seat pad according to the second aspect prevents an occupant from feeling discomfort due to a seat sensor. The seat pad for vehicles can prevent the seat sensor from being subjected to concentrated load, thereby preventing the malfunction of the seat sensor and improving durability of the seat sensor. The seat pad for vehicles allows the commonization of the seat sensor among various seat pads for vehicles of different types.

## Claims

1. A seat pad for vehicles comprising a top part and a bottom part, wherein
the top part and the bottom part are formed separately from each other and then connected to each other, and
the bottom part is formed into the same configuration allowing commonization among different types of vehicles.

2. A seat pad for vehicles as claimed in claim 1, wherein the bottom part is located on the underside of a portion corresponding to the normal sitting position.

3. A seat pad for vehicles as claimed in claim 1 or 2, wherein the top part is made of a material different from that of the bottom part.

4. A seat pad for vehicles as claimed in claim 3, wherein the top part is made of a low-density material which is cheaper than that of the bottom part and the bottom part is made of a high-performance material.

5. A seat pad for vehicles as claimed in any one of claims 1 through 4, wherein the top part and the bottom part are connected by adhesive bonding.

6. A seat pad for vehicles as claimed in any one of claims 1 through 5, wherein the thickness of the bottom part is from 50 to 90 % of the total thickness of the seat pad for vehicles.

7. A seat pad for vehicles as claimed in any one of claims 1 through 6, wherein the length in longitudinal direction of the bottom part is from 300 to 700 mm and the length of width direction of the bottom part is from 200 to 500 mm.

8. A seat pad for vehicles as claimed in any one of claims 1 through 7, wherein the top part and the bottom part are formed separately from each other using different molds and then united.

9. A seat pad for vehicles as claimed in any one of claims 1 through 8, wherein side bulging sections and a seating section of the top part are made of different materials and formed in a same mold, the top part is provided with a concave portion into which the bottom part is fitted, and the top part and the bottom part can be connected by fitting the bottom part into the concave portion.

10. A seat pad for vehicles comprising a top part and a bottom part, wherein
the top part and the bottom part are formed separately from each other and then connected to each other, and
a sheet-like seat sensor is disposed between the matching faces of the bottom part and the top part.

11. A seat pad for vehicles as claimed in claim 10, wherein at least portions of matching faces corresponding to the position of the seat sensor are designed to be flat.

12. A seat pad for vehicles as claimed in claim 10 or 11, wherein the face of the bottom part corresponding to the position of the seat sensor is provided with a mark indicating the position of the seat sensor.

13. A seat pad for vehicles as claimed in claim 12, wherein the mark is a line along the outer periphery of the seat sensor.

14. A seat pad for vehicles as claimed in claim 12, wherein the mark is composed of holes.

15. A seat pad for vehicles as claimed in any one of claims 10 through 14, wherein the seat sensor is provided with a chip-like flexible member and the bottom part is provided with a concave portion to which the chip-like flexible member is fitted.

16. A seat pad for vehicles as claimed in claim 15, wherein the chip-like flexible member and the concave portion are formed in substantially rectangular parallelopiped.

17. A seat pad for vehicles as claimed in claim 15 or 16, wherein the chip-like flexible member and the concave portion are located around the center of a front portion of the seat pad for vehicles.

18. A seat pad for vehicles as claimed in any one of claims 10 through 17, wherein the top part and the bottom part are connected by adhesive bonding.
